# EUROPEAN PATENT APPLICATION

(11) **EP 4 730 706 A1**
(43) Date of publication of application: **22.04.2026**
(21) Application number: 24858073.0
(22) Date of filing: 09.07.2024
(51) Int. Cl.: H04L 9/40

(54) **BUSINESS PROCESSING METHODS, AND APPARATUSES**

(30) Priority: 28.08.2023 CN 202311095309
(71) Applicant: Shenzhen Yinwang Intelligent Technologies Co., Ltd., Shenzhen, Guangdong 518110 (CN)
(72) Inventor: ZHAO, Kang, Shenzhen, Guangdong 518129 (CN); LI, Zhixiong, Shenzhen, Guangdong 518129 (CN); ZHOU, Guangyu, Shenzhen, Guangdong 518129 (CN); TAO, Zhe, Shenzhen, Guangdong 518129 (CN)
(74) Representative: Pfenning, Meinig & Partner mbB
(86) International application number: PCT/CN2024/104442
(87) International publication number: WO 2025/044529

(57) **Abstract**

Provided are a service processing method and apparatus, which relate to the field of security technologies, and can meet an information security requirement of a functional safety operating system, improve service processing security, and are easy to implement. According to the method, a functional safety operating system (a first safety operating system) having high functional safety and high information security requirements may be migrated to a secure world, to process a high-safety and high-trust service in the secure world. A functional safety operating system (a second safety operating system) deployed in a non-secure world may access, by using a secure TEE proxy technology, a TEEOS to execute a service, or access a local security service to execute a service.

## Description

This application claims priority to Chinese Patent Application No. 202311095309.9, filed with the China National Intellectual Property Administration on August 28, 2023 and entitled "SERVICE PROCESSING METHOD AND APPARATUS", which is incorporated herein by reference in its entirety.

### TECHNICAL FIELD

This application relates to the field of security technologies, and in particular, to a service processing method and apparatus.

### BACKGROUND

In a related technology, a same hardware platform may support hosting of heterogeneous operating systems, to implement integration of computing units and sharing of computing power. Different operating systems have different functional safety (safety) and information security (security) requirements. Some functional safety operating systems (safetyOS) need to have both functional safety and information security attributes. In existing heterogeneous operating systems, a functional safety operating system cannot independently access a trusted execution environment operating system, making it difficult to meet an information security requirement of the functional safety operating system.

### SUMMARY

This application provides a service processing method and apparatus that can meet an information security requirement of a functional safety operating system, improve service processing security, and are easy to implement.

To achieve the foregoing objectives, embodiments of this application provide the following technical solutions.

According to a first aspect, this application provides a service processing method, applied to a safe and trusted apparatus. The safe and trusted apparatus includes a first safety operating system migrated from a non-secure world to a secure world, and the first safety operating system is isolated from a trusted execution environment operating system in the secure world. The method includes: obtaining a request for executing a high-safety and high-trust service, where the request for executing the high-safety and high-trust service includes a cryptographic request for the high-safety and high-trust service, and the cryptographic request includes at least one of an encryption request, a decryption request, a key export request, and a key generation request; executing the cryptographic request by using a local trusted application; sending, by the trusted application, a cryptographic request execution result to a high-safety and high-trust application; and executing, by the high-safety and high-trust application, the high-safety and high-trust service based on the cryptographic request execution result.

The first safety operating system is migrated to the secure world. The first safety operating system may be an intelligent driving domain operating system. The intelligent driving domain operating system includes a trusted application and a high-safety and high-trust application. The high-safety and high-trust application on the intelligent driving domain operating system sends a request for executing a high-safety and high-trust service. The request includes a cryptographic request for the high-safety and high-trust service, for example, an encryption request. The local trusted application executes the encryption request to encrypt high-safety and high-trust service data. The trusted application sends the encrypted high-safety and high-trust service data to the high-safety and high-trust application, and then the high-safety and high-trust application executes the high-safety and high-trust service. The high-safety and high-trust application ensures trusted security of the service by using a trusted service provided by the trusted application. In addition, the high-safety and high-trust application and the trusted application are located on a same system. The high-safety and high-trust application may directly send the cryptographic request to the trusted application for execution, and obtain an execution result, thereby ensuring functional safety of the service. This meets an information security requirement of a functional safety operating system. The intelligent driving domain operating system is isolated from the trusted execution environment operating system in the secure world, to prevent data leakage between systems, and further improve security of the method. In addition, in the method, the first safety operating system is migrated to the secure world, so that development costs are high, and resource occupation is small, allowing for long-term evolution and ease of implementation.

In a possible implementation, the high-safety and high-trust service includes an autonomous driving safety service.

Optionally, the intelligent driving domain operating system includes the autonomous driving safety service, for example, an automatic braking service, an automatic cruise control service, an automatic steering service, and an automatic parking service.

According to a second aspect, this application provides a service processing method, applied to a safe and trusted apparatus. The safe and trusted apparatus includes a trusted execution environment operating system in a secure world, and a third operating system and a second safety operating system in a non-secure world. The method includes: obtaining a request for executing a service; and sending the request for the service to the trusted execution environment operating system or a local security service according to a trust requirement and a performance requirement of the request for the service, where the request for the service is used to trigger the trusted execution environment operating system or the local security service that receives the request for the service, to execute the service.

Optionally, the second safety operating system may be an instrument domain operating system, and the instrument domain operating system includes a safe and trusted application, a security service scheduling module, a local security service module, and the like. The safe and trusted application may send the request for executing the service to the security service scheduling module. After receiving the request for executing the service, the security service scheduling module may send the request for the service to the trusted execution environment operating system or the local security service according to the trust requirement and the performance requirement of the request for the service. The trusted execution environment operating system or the local security service may execute the service.

Optionally, the instrument domain operating system may further include a cross-domain communication component, configured to forward the request for the service.

In this way, requests with different requirements for service are sent to different operating systems for execution, so that security of service performance can be improved and efficiency can be improved. In addition, a process in which the security service scheduling module sends the request for the service to the trusted execution environment operating system or the local security service according to the trust requirement and the performance requirement of the request for the service has little interference to a user, and an overall system architecture is optimized to provide better service and user experience.

In a possible implementation, sending the request for the service to the trusted execution environment operating system or the local security service according to the trust requirement and the performance requirement of the request for the service includes: if the trust requirement of the service is greater than the performance requirement, encrypting the request for the service, and sending the encrypted request for the service to the trusted execution environment operating system; or if the performance requirement of the request for the service is greater than the trust requirement, sending the request for the service to the local security service.

In this way, a request for a service having a high trust requirement is encrypted and then sent to the trusted execution environment operating system, and the trusted execution environment operating system executes the service. This can prevent service data leakage, improve service transmission security, and the trusted execution environment operating system can ensure trusted security of the service. A request for a service having high performance security is sent to a local security service, and the local security service executes the service, which improves efficiency and performance of service execution.

For example, a request for a service whose trust requirement is greater than a performance requirement may be a trusted service request for a real-time road condition and navigation display service, and an encrypted trusted service request for the real-time road condition and navigation display service is sent to the trusted execution environment operating system. The trusted execution environment operating system executes the real-time road condition and navigation display service.

A request for a service whose performance requirement is higher than a trust requirement may be a request for an audio and multimedia control service, and the request for the audio and multimedia control service is sent to a local software algorithm. The local software algorithm executes the audio and multimedia control service.

In a possible implementation, the service includes a trusted and secure safety instrument display service.

For example, the trusted and secure safety instrument display service may include the audio and multimedia control service, the real-time road condition and navigation display service, and the like.

According to a third aspect, this application provides a service processing method, applied to a safe and trusted apparatus. The safe and trusted apparatus includes a trusted execution environment operating system in a secure world, and a third operating system and a second safety operating system in a non-secure world. The method includes: A proxy client application on the third operating system receives a first request from the second safety operating system, where the first request is an encrypted request; and the proxy client application on the third operating system sends the first request to the trusted execution environment operating system, where the proxy client application is isolated from another application and/or component on the third operating system.

The first request is the encrypted request, which ensures security of the request. In addition, the proxy client application is isolated from the another application and/or component on the third operating system, to prevent data leakage of the first request for the proxy client application, thereby further improving security of the first request.

Optionally, the third operating system may be an infotainment domain operating system, and the infotainment domain operating system further includes a cross-domain notification component, configured to receive the first request from the second safety operating system, and send the first request to the proxy client application. The proxy client application may invoke a trust zone driver module to send the first request to the trusted execution environment operating system.

For example, the first request may be a trusted service request for a real-time road condition and navigation display service.

In a possible implementation, the first request includes a request for executing a trusted and secure safety instrument display service.

For example, the safety instrument display service includes the real-time road condition and navigation display service, a user behavior analysis service, and the like.

According to a fourth aspect, this application provides a service processing method, applied to a safe and trusted apparatus. The safe and trusted apparatus includes a trusted execution environment operating system in a secure world, and a third operating system and a second safety operating system in a non-secure world. The method includes: receiving, by the trusted execution environment operating system, a first request from the second safety operating system, where the first request is an encrypted request, and the first request includes a request for executing a first service; decrypting the first request, and executing the first service, to obtain an execution result of the first service; and returning the encrypted execution result of the first service to the second safety operating system.

The first request is the encrypted request, which ensures security of the first request. In addition, the first service is from the second safety operating system, which ensures functional safety of the first service. The trusted execution environment operating system executes the first service, which ensures trusted security of the first service. This meets an information security requirement of a functional safety operating system.

For example, the trusted execution environment operating system may be a security domain operating system. The security domain operating system receives a trusted service request (the first request) for a real-time road condition and navigation display service. After decrypting the request, the security domain operating system executes the real-time road condition and navigation display service to obtain an execution result, and returns the encrypted execution result to an instrument domain operating system (the second safety operating system).

In a possible implementation, that the trusted execution environment operating system receives the first request from the second safety operating system includes: The trusted execution environment operating system receives the first request from the second safety operating system through the third operating system.

In a possible implementation, the first service includes a trusted and secure safety instrument display service.

For example, the safety instrument display service includes the real-time road condition and navigation display service, a user behavior analysis service, and the like.

According to a fifth aspect, this application provides a service processing apparatus, used in a safe and trusted apparatus. The safe and trusted apparatus includes a first safety operating system migrated from a non-secure world to a secure world, and the first safety operating system is isolated from a trusted execution environment operating system in the secure world. The first safety operating system is configured to obtain a request for executing a high-safety and high-trust service. The first safety operating system is further configured to encrypt the request for the high-safety and high-trust service by using a local trusted application. The first safety operating system is further configured to send the encrypted request to a high-safety and high-trust application by using the trusted application. The first safety operating system is further configured to execute the high-safety and high-trust service by using the high-safety and high-trust application in response to the encrypted request.

In a possible implementation, the high-safety and high-trust service includes an autonomous driving safety service.

According to a sixth aspect, this application provides a service processing apparatus, used in a safe and trusted apparatus. The safe and trusted apparatus includes a trusted execution environment operating system in a secure world, and a third operating system and a second safety operating system in a non-secure world. The apparatus includes the second safety operating system, configured to obtain a request for executing a service. The second safety operating system is further configured to send the request for the service to the trusted execution environment operating system or a local security service according to a trust requirement and a performance requirement of the request for the service. The request for the service is used to trigger the trusted execution environment operating system or the local security service that receives the request for the service, to execute the service.

In a possible implementation, the second safety operating system is further configured to: if the trust requirement of the request for the service is greater than the performance requirement, encrypt the request for the service, and send the encrypted request for the service to the trusted execution environment operating system for execution; or if the performance requirement of the request for the service is greater than the trust requirement, send the request for the service to the local security service for execution.

In a possible implementation, the service includes a trusted and secure safety instrument display service.

According to a seventh aspect, this application provides a service processing apparatus, used in a safe and trusted apparatus. The safe and trusted apparatus includes a trusted execution environment operating system in a secure world, and a third operating system and a second safety operating system in a non-secure world. The apparatus includes the third operating system, configured to receive a request for a service from the second safety operating system, where the first request is an encrypted request, and an application receiving the request for the service is a proxy client application on the third operating system. The third operating system is further configured to send the request for the service to the trusted execution environment operating system, and the proxy client application is isolated from another application and/or component on the third operating system.

In a possible implementation, the first request includes a request for executing a trusted and secure safety instrument display service.

According to an eighth aspect, this application provides a service processing apparatus, used in a safe and trusted apparatus. The safe and trusted apparatus includes a trusted execution environment operating system in a secure world, and a third operating system and a second safety operating system in a non-secure world. The apparatus is further used in the trusted execution environment operating system, configured to receive a first request from the second safety operating system, where the first request is an encrypted request, and the first request includes a request for executing a first service. The trusted execution environment operating system is further configured to: decrypt the first request, and execute the first service, to obtain an execution result of the first service. The trusted execution environment operating system is further configured to return the encrypted execution result of the first service to the second safety operating system.

In a possible implementation, the trusted execution environment operating system is further configured to receive the first request from the second safety operating system through the third operating system.

In a possible implementation, the first service includes a trusted and secure safety instrument display service.

According to a ninth aspect, this application provides a service processing electronic device, including a first safety operating system, a second safety operating system, a third operating system, and a trusted execution environment operating system. The electronic device performs the method according to any one of the first aspect to the fourth aspect.

According to a tenth aspect, this application provides a service processing system, including a processor. The processor is coupled to a memory, and the processor is configured to execute a computer program stored in the memory, so that the electronic device health degree evaluation system performs the methods according to the first aspect to the fourth aspect.

According to an eleventh aspect, this application provides a computer-readable storage medium. The computer-readable storage medium includes a computer program or instructions, and when the computer program or the instructions are run on a service processing apparatus, the service processing apparatus is enabled to perform the methods according to the first aspect to the fourth aspect.

According to a twelfth aspect, this application provides a chip system, including at least one processor and at least one interface circuit. The at least one interface circuit is configured to: perform a transceiver function, and send instructions to the at least one processor. When the at least one processor executes the instructions, the at least one processor performs the method according to any one of the first aspect to the fourth aspect.

According to a thirteenth aspect, this application further provides a computer program product, including instructions. When the instructions are run on a computer, the computer is enabled to perform the method according to any one of the first aspect to the fourth aspect.

According to a fourteenth aspect, an embodiment of this application provides a circuit system. The circuit system includes a processing circuit, and the processing circuit is configured to perform the method according to the first aspect or any one of the implementations of the first aspect to the fourth aspect.

For technical effects corresponding to the fifth aspect to the eighth aspect and any one of the implementations of the fifth aspect to the eighth aspect, correspondingly refer to technical effects corresponding to the first aspect to the fourth aspect and any one of the implementations of the first aspect to the fourth aspect. For technical effects corresponding to the ninth aspect to the fourteenth aspect and any one of the implementations of the ninth aspect to the fourteenth aspect, correspondingly refer to technical effects corresponding to the first aspect to the fourth aspect and any one of the implementations of the first aspect to the fourth aspect. Details are not described herein again.

### BRIEF DESCRIPTION OF DRAWINGS

FIG. 1 is a diagram of an architecture of an operating system according to an embodiment of this application;
FIG. 2 is a diagram of an architecture of another operating system according to an embodiment of this application;
FIG. 3 is a diagram of an architecture of another operating system according to an embodiment of this application;
FIG. 4 is a diagram of an architecture of another operating system according to an embodiment of this application;
FIG. 5 is a diagram of an architecture of another operating system according to an embodiment of this application;
FIG. 6 is a schematic flowchart of a service processing method according to an embodiment of this application;
FIG. 7 is a schematic flowchart of service scheduling according to an embodiment of this application;
FIG. 8 is a schematic flowchart of a service processing method according to an embodiment of this application;
FIG. 9 is a schematic flowchart of an encryption method according to an embodiment of this application;
FIG. 10 is a schematic flowchart of another service processing method according to an embodiment of this application;
FIG. 11 is a diagram of a structure of an electronic device according to an embodiment of this application; and
FIG. 12 is a diagram of a structure of a chip system according to an embodiment of this application.

### DESCRIPTION OF EMBODIMENTS

The terms "including", "having", and any other variant thereof mentioned in the descriptions of embodiments of this application are intended to cover non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word like "example" or "for example" is intended to present a relative concept in a specific manner.

In the descriptions of embodiments of this application, unless otherwise stated, "a plurality of" means two or more. In this specification, "and/or" describes only an association relationship between associated objects and indicates that there may be three relationships. For example, A and/or B may represent the following three cases: Only A exists, both A and B exist, and only B exists.

First, some technical terms used in embodiments of this application are described.
1. Virtual machine (virtual machine, VM) technology: In this technology, virtual computers that are independent of each other may be created based on a hypervisor virtualization technology, and the created virtual computer may be referred to as a virtual machine for short. A plurality of virtual machines may be isolated from each other. An operating system may be installed on the virtual machine, and an application may be run on the operating system.
2. TrustZone (TrustZone) technology:

Through the TrustZone technology, a computer system can be physically isolated into a secure world and a non-secure world, protecting data security and integrity and preventing data from malicious attacks. System resources of electronic devices (such as mobile phones, tablets, and vehicle-mounted devices) based on the TrustZone technology are isolated into two worlds: non-secure world (normal world) and secure world (secure world). A rich execution environment (rich execution environment, REE) runs in the non-secure world. A trusted execution environment (trusted execution environment, TEE) runs in the secure world.

The REE is also referred to as a common execution environment, and includes a rich execution environment operating system (rich execution environment operating system, REE OS) and a client application (client application, CA) that run on a general-purpose processor.

It should be noted that, the REE does not mean that an operating system or software running in the REE is malicious, but means that security of the REE is lower than that of the TEE. Usually, a service on an operating system of the REE may invoke a TA service on the TEE, to ensure trusted security of the service.

The TEE is also referred to as a secure execution environment, and a trusted execution environment operating system (trusted execution environment operating system, TEE OS) may be run in the TEE to provide trusted security services (for example, a fingerprint matching service, a password verification service, and a face matching service) for the CA. These trusted security services may be run on the TEE OS in a form of trusted applications (trusted application, TA).

The TEE may be used for one or more of the following purposes: 1. Content protection mechanism: protecting against unauthorized use of some high-definition movies, music, and the like. 2. Mobile financial service: mobile payment and the like. 3. Authentication: fingerprint recognition, facial recognition, and the like. 4. Protection of confidential information for enterprises or governments.

In a possible implementation, a trust area mechanism may set a security-sensitive memory as a secure memory (secure memory) by configuring a TrustZone address space controller (Trustzone address space controller, TZASC) register and a TrustZone memory adapter (Trustzone memory adapter, TZMA) register. In this way, the REE cannot access the memory.

Optionally, there may be three working modes in the non-secure world: an exception level 0 (Exception Level 0, EL0) mode, an exception level 1 (Exception Level 1, EL1) mode, and an exception level 2 (Exception Level 2, EL2) mode. The EL0 mode is a mode used to run a user program. The EL1 mode is a mode used to run a kernel of an operating system. The EL2 mode is a mode used to run a virtual machine monitor. An exception level of the EL1 mode is higher than that of the EL0 mode, and an exception level of the EL2 mode is higher than that of the EL1 mode.

Optionally, there are three working modes in the secure world, namely, a secure state, exception level 2 (secure state, exception level 3, SEL2) mode, a secure state, exception level 1 (secure state, exception level 1, SEL1) mode, and a secure state, exception level 0 (secure state, exception level 0, SEL0) mode. The SEL0 mode is a mode used to run a user program. The SEL1 mode is a mode used to run a kernel of an operating system. The SEL2 mode is a mode used to run a virtual machine monitor. A secure state exception level of the SEL1 mode is higher than that of the SEL0 mode, and a secure state exception level of the SEL2 mode is higher than that of the SEL1 mode.

### 3. Automotive functional safety integrity level (automotive safety integrity level, ASIL):

The automotive functional safety standard ISO 26262 defines automotive safety integrity levels, which are classified into four levels from low to high: ASIL-A, ASIL-B, ASIL-C, and ASIL-D. A higher security risk of an operating system indicates a higher functional safety requirement level, and need a higher security protection.

The following describes a service processing method and apparatus provided in embodiments of this application in detail with reference to the accompanying drawings.

In an embodiment, in scenarios such as in-vehicle scenario virtualization, in-vehicle scenario containerization, and mobile terminal device, heterogeneous operating systems can be hosted on a same hardware platform. The in-vehicle scenario virtualization is used as an example. In an intelligent driving scenario, a safetyOS that hosts a real-time and safe autonomous driving service and a general-purpose OS that hosts an intelligent vehicle control service need to be deployed. In an intelligent cockpit scenario, a safetyOS that hosts a safety instrument display and a general OS that hosts an entertainment application need to be deployed.

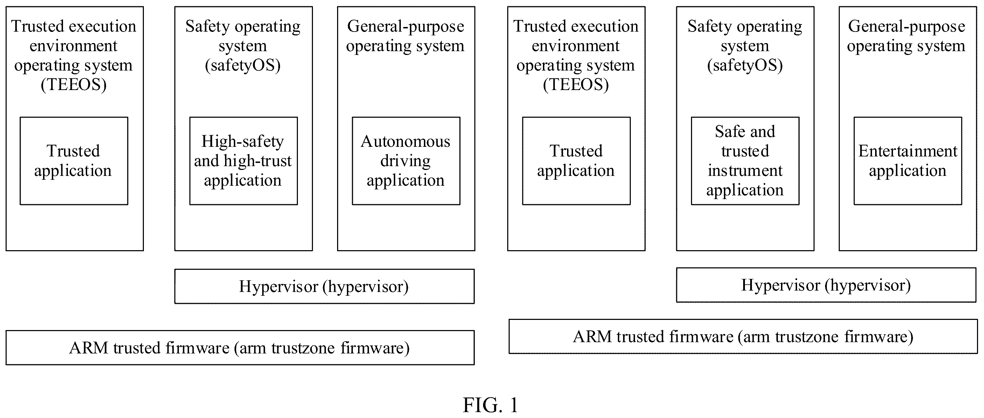

FIG. 1 shows deployment of operating systems in an intelligent driving scenario and an intelligent cockpit scenario in an in-vehicle scenario. A functional safety level requirement of an intelligent driving domain may be ASIL-D. The intelligent driving scenario includes a trusted execution environment operating system, a safety operating system, and a general-purpose operating system. The trusted execution environment operating system may ensure trusted security of an application, a service, and the like in the trusted execution environment operating system, and a trusted application is deployed on the trusted execution environment operating system. The safety operating system can ensure functional safety of an application, a service, and the like in the operating system. A high-safety and high-trust application related to autonomous driving is deployed. The high-safety and high-trust application may invoke a confidential service provided by the trusted application on the trusted execution environment, to achieve a trusted objective.

Trusted security indicates integrity, confidentiality, and availability of an application, a service, data, and the like on an operating system, to prevent security threats such as unauthorized access, data leakage, and malicious attack, and ensure stable running and reliability of the operating system.

Functional safety means that the operating system can maintain a safe operation in case of a fault or an error and avoid an unacceptable risk to personnel, environment, or property. The operating system includes functional safety functions such as fault detection, fault tolerance, self-diagnosis, and correction, to ensure that the operating system can maintain a secure state in case of a fault.

Optionally, a functional safety level of the safety operating system may be ASIL-B. The general-purpose operating system has no requirement for functional safety and trusted security, and applications such as software upgrade, data download, and data upload are deployed.

The intelligent cockpit scenario includes a trusted execution environment operating system, a safety operating system, and a general-purpose operating system. A type of the general-purpose operating system in the intelligent cockpit scenario may be the same as or different from a type of the general-purpose operating system in the intelligent driving scenario.

Optionally, a trusted execution environment may ensure trusted security of an application, a service, and the like in an operating system in the trusted execution environment, and a trusted application is deployed in the trusted execution environment. The safety operating system can ensure functional safety of an application, a service, and the like in the operating system. A safe and trusted instrument application, such as a vehicle instrument display application or a navigation application, is deployed on the safety operating system.

Optionally, both a functional safety level of the safety operating system in the intelligent cockpit scenario and a functional safety level of the intelligent cockpit scenario may be ASIL-B.

Optionally, the general-purpose operating system in the intelligent cockpit scenario and the general-purpose operating system in the intelligent driving scenario have no requirement for functional safety and trusted security. An entertainment-related application, such as a music application, is deployed on the general-purpose operating system in the intelligent cockpit scenario.

Optionally, hardware devices in the safety operating system and the general-purpose operating system in the intelligent cockpit scenario, the safety operating system and the general-purpose operating system in the intelligent driving scenario may be centrally managed by using a virtual machine monitor (virtual machine monitor, VMM) (which may also be referred to as a hypervisor). The hardware devices may be shared or exclusively used by a virtual machine in a sharing or pass-through manner.

Optionally, an ARM trusted firmware (arm trustzone firmware, ATF) runs on a TrustZone in an architecture, and is configured to manage communication and resource access between a secure world (a trusted execution environment operating system) and a non-secure world (a safety operating system and a general-purpose operating system Android) in each of the intelligent driving scenario and the intelligent cockpit scenario.

In the foregoing operating system deployment manner in the intelligent driving scenario and the intelligent cockpit scenario, the functional safety operating system cannot directly access the TEEOS to complete information security service invoking. Therefore, it is difficult to meet an information security requirement of the functional safety operating system.

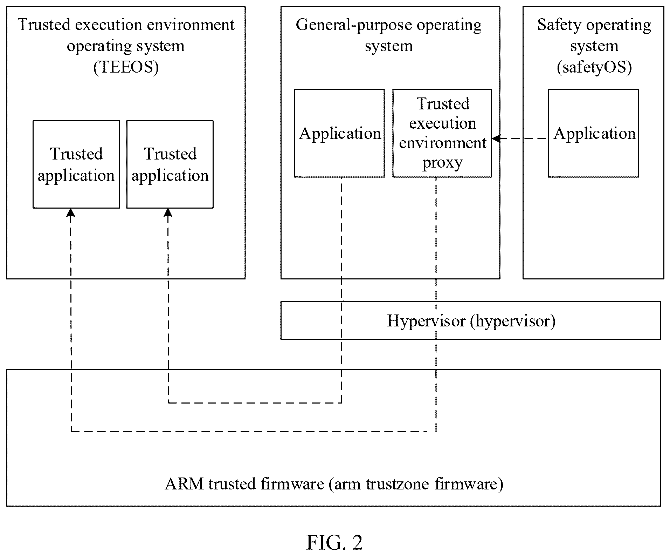

In a related technology, a skilled person may implement access of a functional safety operating system to a TEEOS by using a TEE proxy technology, to meet an information security requirement of the functional safety operating system. As shown in FIG. 2, a general-purpose operating system may directly access the TEEOS through a hypervisor and an ATF, and invoke a TA on the TEEOS to complete an information security service. The functional safety operating system sends a TEEOS access request to the general-purpose operating system via a communication channel between the functional safety operating system and the general-purpose operating system. The general-purpose operating system accesses the TEEOS as a proxy of the safety operating system, and invokes the TA on the TEEOS to complete the information security service. However, in an in-vehicle scenario in which CPU and memory resources are strained, if TEE requests of all operating systems are proxied, overheads are high. A proxy channel is vulnerable to an external attack, causing data leakage.

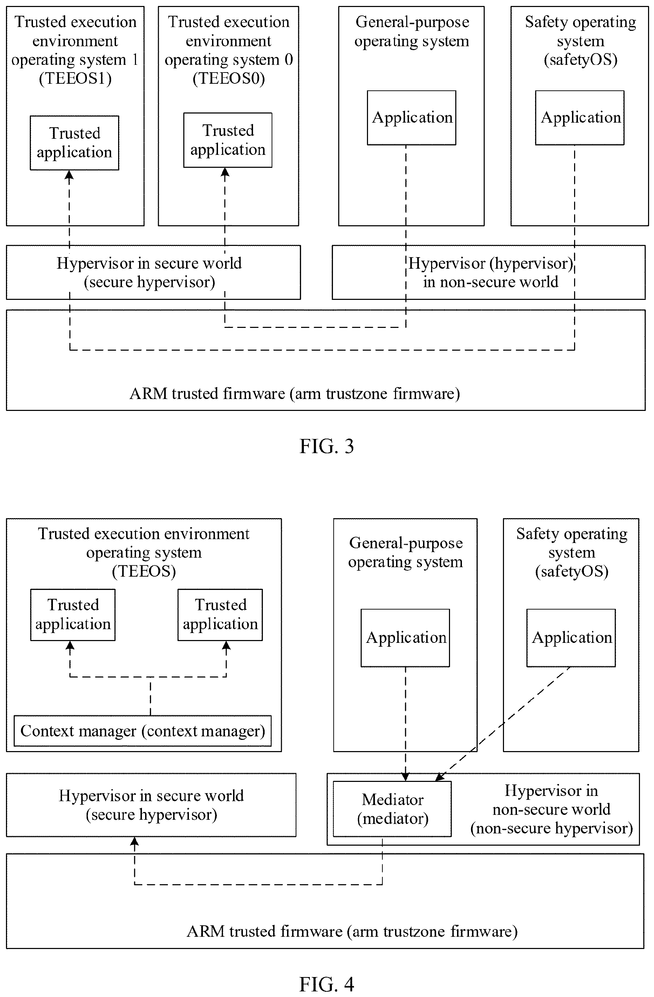

Alternatively, a skilled person may implement access of a functional safety operating system to a TEEOS by using a TEE virtualization technology based on a secure state, exception level 2 (secure state, exception level 2, SEL2), to meet an information security requirement of the functional safety operating system. As shown in FIG. 3, a plurality of TEEOSs may be deployed in a secure world by using a virtualization technology of the secure world, and each operating system has a dedicated TEEOS. A general-purpose operating system may directly access TEEOS0 through a hypervisor and an ATF, and the functional safety operating system may directly access TEEOS1 through the hypervisor and the ATF. If a vehicle includes a plurality of general-purpose operating systems and a plurality of functional safety operating systems, a plurality of TEEOSs are correspondingly required. In this case, development costs and resource occupation are high, so that it is difficult to implement, and long-term evolution is difficult.

Alternatively, a skilled person may implement access of a functional safety operating system to a TEEOS by using a mediator-based TEE virtualization technology, to meet an information security requirement of the functional safety operating system. As shown in FIG. 4, a plurality of operating systems in a non-secure world communicate with one TEEOS in a secure world through a mediator in a hypervisor. The mediator can implement TA process-level isolation to ensure normal processing of a service request. However, a skilled person needs to modify both the hypervisor and TEEOS, which results in an excessively high requirement for coupling between a plurality of components and makes implementation difficult.

To resolve the foregoing problem, this embodiment of this application provides a service processing method. The method can meet an information security requirement of a functional safety operating system. A functional safety operating system (a first safety operating system) having high-functional safety and high-information security requirements in a non-secure world is migrated to a secure world. In this way, the functional safety operating system may directly invoke a local TA in the secure world to complete a high-functional safety and high-information security service (a high-safety and high-trust service). A functional safety operating system (a second safety operating system) deployed in the non-secure world may access a TEEOS by using a secure TEE proxy technology, to meet the information security requirement of the functional safety operating system. Alternatively, a functional safety operating system deployed in the non-secure world may access a local security service, to meet the information security requirement of the functional safety operating system. It can be learned that the technical solutions in this embodiment of this application can meet the information security requirement of the functional safety operating system, and are easy to implement.

Optionally, the service processing method may alternatively be a request processing method in a service. An operating system may execute the service or respond to a request. This is not specifically limited in this embodiment of this application.

Optionally, the service processing method is applied to an in-vehicle scenario. A vehicle system includes an intelligent driving domain operating system, a security domain operating system, an infotainment domain operating system, an instrument domain operating system, and the like. It should be understood that a vehicle may further include another operating system. This is not specifically limited in this embodiment of this application.

The intelligent driving domain operating system is configured to host a high-safety and high-trust service. For example, a real-time autonomous driving service implements autonomous navigation, control, and operation of a vehicle, and implements functions such as automatic braking, automatic steering, and automatic parking. A high-definition map and positioning service provides detailed information such as a vehicle location, a road environment, and a traffic sign, to support the autonomous driving service. A driving behavior analysis service provides real-time analysis and evaluation of a behavior of a driver, such as detecting fatigue degree and attention concentration of the driver. It should be understood that the intelligent driving domain operating system of the vehicle may further include another service. This is not specifically limited in this application.

The security domain operating system is configured to host a highly trusted cryptology-related service. For example, an encryption and decryption service encrypts and decrypts sensitive data to ensure security of the sensitive data during transmission and storage. A key management service provides a secure key generation, storage, and distribution mechanism to ensure confidentiality and integrity of a key. A security protocol implement service implements various security protocols, such as the secure sockets layer (secure sockets layer, SSL) protocol that protects network communication security and the Internet protocol security (internet protocol security, IPSec) that protects network layer data security. These protocols rely on a cryptographic algorithm and the key management service, and are implemented and managed in the security domain operating system. It should be understood that the security domain operating system of the vehicle may further include another service. This is not specifically limited in this application.

The infotainment domain operating system is configured to: host a general-purpose rich ecosystem-based entertainment service and a multimedia service, and provide a security service proxy channel for another operating system in the non-secure world by using a secure TEE proxy technology. For example, a driver can play music and broadcast through an in-vehicle audio service. A driver or a passenger can watch movies, play videos, play games, and the like through an entertainment media service. It should be understood that the infotainment domain operating system of the vehicle may further include another service. This is not specifically limited in this application.

The instrument domain operating system is configured to host a real-time safety instrument display-related service that has a functional safety requirement. For example, a speed and rotation speed display service is configured to display a current speed of a vehicle and a current speed of an engine. A temperature and pressure monitoring service is configured to: monitor a temperature and pressure of a vehicle in real time and remind a driver of an exception. Real-time road condition and navigation display service: A vehicle instrument cluster can display road condition information and navigation guidance in real time, including real-time traffic condition, navigation map, and steering indication, helping a driver select an optimal route and navigation for driving. The real-time road condition and navigation display service relates to functions such as a path planning algorithm and real-time user positioning. Audio and multimedia control service: For example, an audio and multimedia control button or touchscreen is integrated on a vehicle instrument cluster to adjust volume, switch radio, and select a music playlist, providing a convenient and secure audio and entertainment operation. It should be understood that the instrument domain operating system of the vehicle may further include another service. This is not specifically limited in this application.

Optionally, in this embodiment of this application, a plurality of operating systems in an in-vehicle scenario may be virtualized by using a virtualization technology, and then operating systems of different security levels are deployed on different virtual devices. Hardware of an entire system is centrally managed by using a virtual machine monitor (virtual machine monitor, VMM) (which is also referred to as a hypervisor). The hardware device may be shared or exclusively used by a virtual machine (virtual machine, VM) in a sharing or pass-through manner. In this solution, different operating systems are deployed on different virtual machines.

For example, the intelligent driving domain operating system is deployed in a virtual machine 1 in the secure world, and the security domain operating system is deployed in a virtual machine 0 in the secure world. The infotainment domain operating system is deployed in a virtual machine 1 in the non-secure world, and the instrument domain operating system is deployed in a virtual machine 0 in the non-secure world.

Optionally, in this embodiment of this application, a secure hypervisor (secure hypervisor) may be deployed based on a SEL2 hardware feature, to isolate a plurality of VMs in the secure world. In addition, a non-secure hypervisor (non-secure hypervisor) is deployed to isolate a plurality of VMs in the non-secure world. Each VM is isolated to ensure security of data or the like in the VM.

The following describes the method provided in this embodiment of this application with reference to the accompanying drawings.

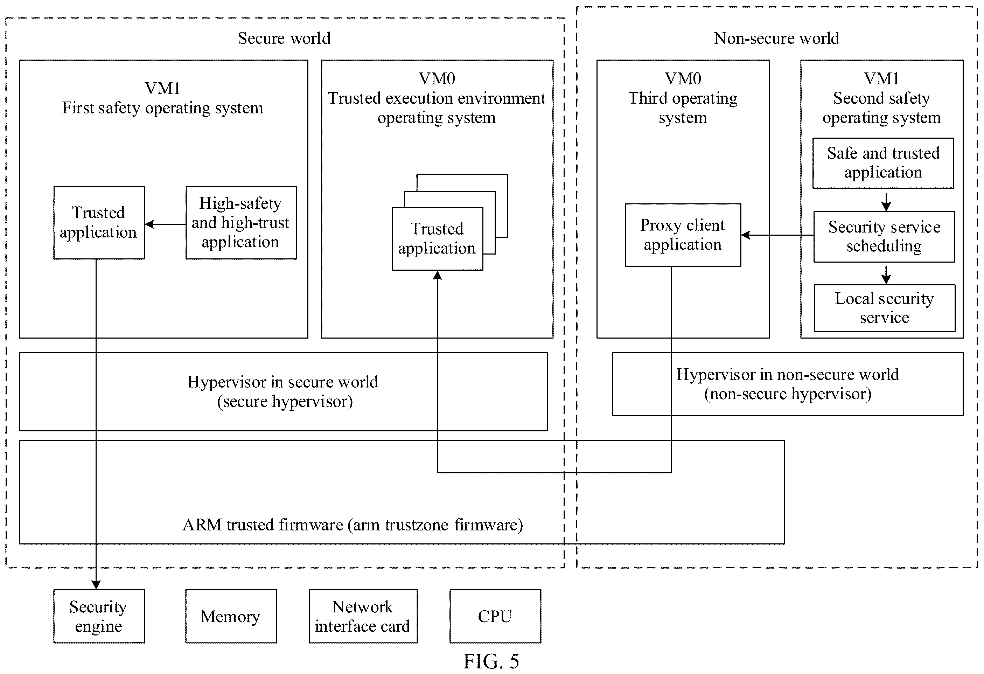

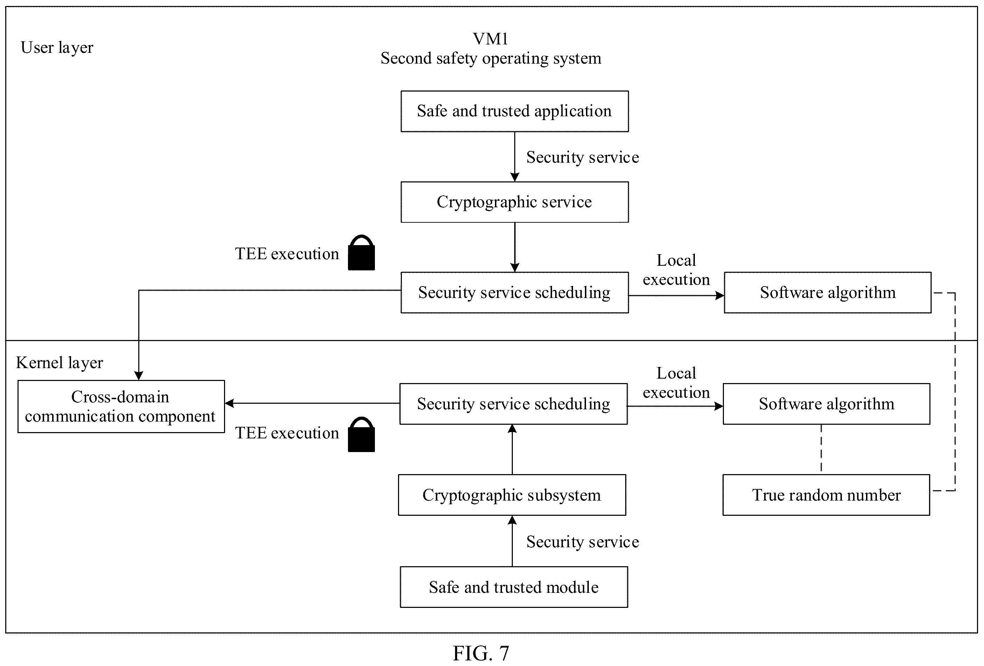

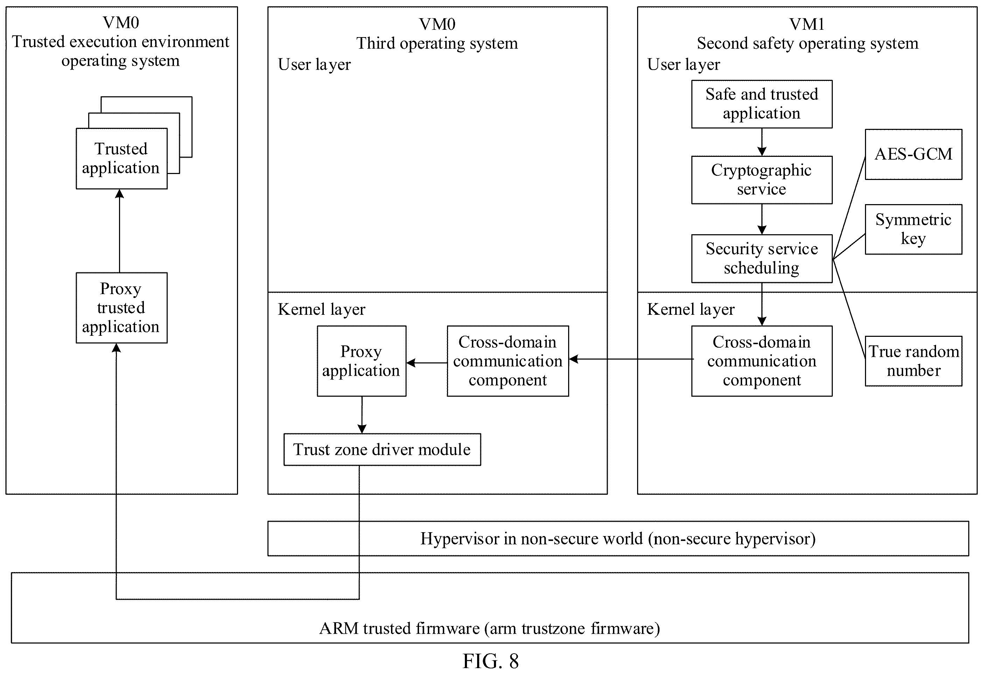

FIG. 5 is a diagram of an architecture of an operating system according to an embodiment of this application. A first safety operating system and a trusted execution environment operating system are located in a secure world, and a third operating system and a second safety operating system are located in a non-secure world. For another component in the operating system and a connection relationship between components, refer to the architectures shown in FIG. 7 and FIG. 8. Details are not described again.

Refer to FIG. 5. For the first safety operating system (a functional safety operating system) deployed in the secure world, a local TA in the secure world is invoked to encrypt a high-safety and high-trust service. Optionally, the TA on the first safety operating system may be further configured to: decrypt the high-safety and high-trust service, export a key, generate a key, and the like. In this application, an example in which a trusted application encrypts the high-safety and high-trust service is used for description.

Optionally, the first safety operating system includes a plurality of high-safety and high-trust applications (high-functional safety and high-information security applications), and the high-safety and high-trust application may invoke the local TA in the secure world to encrypt the high-safety and high-trust service. For example, the first safety operating system may be an intelligent driving domain operating system.

For example, the first safety operating system is the intelligent driving domain operating system, and the intelligent driving domain operating system is installed on a VM1 in the secure world. An autonomous driving application is installed on the intelligent driving domain operating system, and a trusted application is further installed on the VM1.

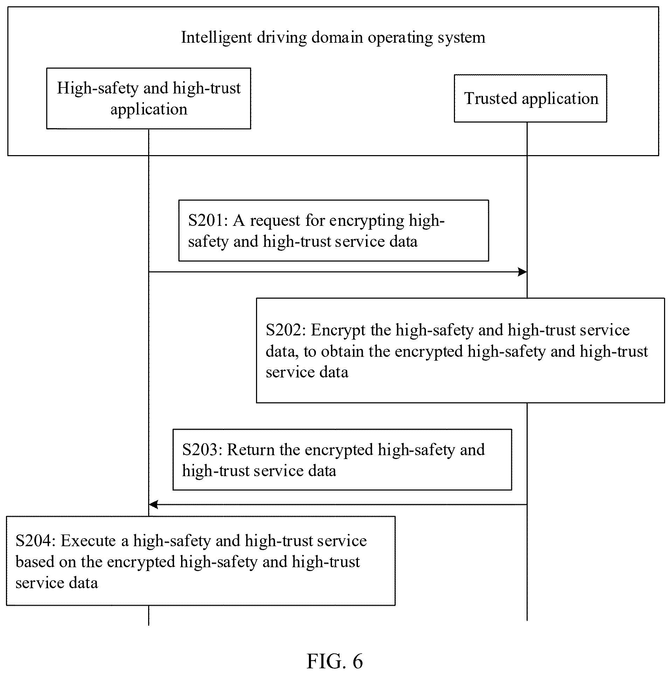

As shown in FIG. 6, a procedure in which an intelligent driving domain operating system executes a high-safety and high-trust service may include the following steps S201 to S204.

S201: A high-safety and high-trust application sends, to a local trusted application, a request for encrypting high-safety and high-trust service data.

Optionally, the high-safety and high-trust application on the intelligent driving domain operating system may initiate, to the trusted application, the request for encrypting the high-safety and high-trust service data. For example, an autonomous driving application on the intelligent driving domain operating system sends a request for encrypting automatic braking service data, and sends the encryption service data request to a trusted application on the intelligent driving domain operating system.

S202: The local trusted application encrypts the high-safety and high-trust service data, to obtain the encrypted high-safety and high-trust service data.

Optionally, after receiving the request for encrypting the high-safety and high-trust service data, the local trusted application encrypts the high-safety and high-trust service data in response to the request, to obtain the encrypted high-safety and high-trust service data.

For example, after the local trusted application receives the request for encrypting the automatic braking service data, the trusted application encrypts the automatic braking service data in response to the request, to obtain encrypted automatic braking service data.

Optionally, when encrypting the automatic braking service data, the local trusted application may access a security engine, to improve performance and confidentiality of the trusted application. Optionally, when executing a trusted service such as a decryption operation or key export, the trusted application may also access the security engine, to improve performance and confidentiality of the trusted application.

S203: The local trusted application returns the encrypted high-safety and high-trust service data to the high-safety and high-trust application.

For example, the local trusted application may return the encrypted automatic braking service data to the autonomous driving application.

S204: The high-safety and high-trust application executes the high-safety and high-trust service based on the encrypted high-safety and high-trust service data.

Optionally, the local trusted application may return the encrypted high-safety and high-trust service request data to the high-safety and high-trust application, and the high-safety and high-trust application executes the high-safety and high-trust service based on the returned service request data.

Optionally, after receiving the encrypted high-safety and high-trust service request data, the high-safety and high-trust application may decrypt the high-safety and high-trust service request data, and execute the high-safety and high-trust service based on the decrypted service request data.

For example, after receiving the encrypted automatic braking service request data, an automatic braking application may decrypt the encrypted automatic braking service request data, and execute an automatic braking service based on the decrypted automatic braking service request data.

Still refer to FIG. 5. For the second safety operating system (a functional safety operating system) deployed in the non-secure world, service distribution is performed based on a performance requirement and a trust requirement of a request for a service.

Optionally, the second safety operating system may include a safe and trusted application, a security service scheduling module, a local security service module, and the like.

The safe and trusted application may send a request for a security service (or a security service), and send the request for the security service to the security service scheduling module.

The security service scheduling module is a module configured to manage and schedule a security-related service request (service request). The security service scheduling module receives a service from a security service requester, and distributes a request to a proper security service for execution based on a performance requirement, a trust requirement, a type, a priority, and another related information of the request. For example, the request is sent to the local security service module or a trusted application in the secure world.

The local security service module is a module that provides a security service function in a local environment, and the local security service module executes a security service for a short time and has high performance.

Optionally, in this embodiment of this application, the safe and trusted application may send the request for the security service, and send the request for the security service to the security service scheduling module. After receiving the request for the security service, the security service scheduling module may distribute the request for the security service according to a performance requirement, a trust requirement, and the like of the request for the security service.

Optionally, the performance requirement (a performance requirement of the service) of the request for the security service includes a time (response time) requirement, throughput, scalability, and the like for executing the security service. A service usually needs to be executed within a specified time. A high performance requirement of the service indicates a short time for executing the service, and a low performance requirement of the service indicates a long time for executing the service. The throughput of the service indicates a service volume processed by an operating system in a unit time. The scalability of the service indicates that an operating system can correspondingly increase or decrease, based on an increase or decrease of a service, a resource for executing the service.

Optionally, a performance requirement level of the service may be determined based on a length of a time for executing the service. A shorter time for executing the service indicates a higher performance requirement level of the service. A higher performance requirement level indicates a higher performance requirement. For example, when the time for executing the service needs to be within [0,0.02] s, the performance requirement level of the service is level 4. When the time for executing the service needs to be within (0,0.05] s, the performance requirement level of the service is level 3. When the time for executing the service needs to be within (0.05,0.1] s, the performance requirement level of the service is level 2. When the time for executing the service needs to be within [0.1,0.5] s, the performance requirement level of the service is level 1. It should be understood that the foregoing classification of the performance requirement level of the service is merely an example, and the classification of the performance requirement level of the service may alternatively be in another manner. This is not specifically limited in this embodiment of this application.

The trust requirement of the request for the security service (a trust requirement of the service) include information security, authentication and authorization, and security audit and monitoring during service execution. A higher trust requirement of the service indicates higher trusted security of the service. The information security during service execution includes security of user data, data generated during service execution, or the like. A high trust requirement of the service indicates a high information security requirement during service execution, and a low trust requirement of the service indicates a low information security requirement during service execution. The authentication and authorization of the service indicates that identity authentication, access permission control, and the like need to be performed for executing the service. For example, only an authorized user can access a specific resource, and the user should be authenticated before accessing the resource. The security audit and monitoring of the service indicates that the service should have a security audit and monitoring mechanism, such as log recording, anomaly detection, intrusion detection, and real-time monitoring, to ensure trusted security of the service.

Optionally, the trust requirement of the service may be classified into different levels.

For example, for some non-sensitive services that have a low information security requirement, do not require identity authentication and authorization, and do not require security audit and monitoring, and the like, a trust requirement level of the services is level 1. For some relatively sensitive services that have a relatively high information security requirement, and may require identity authentication and authorization, security audit and monitoring, and the like, a trust requirement level of the services is level 2. For some sensitive services that have a stricter information security requirement, and require further identity authentication and authorization, and continuous security audit and monitoring, a trust requirement level of the services is level 3. For some highly sensitive services that have an extremely high information security requirement, and require multiple identity authentication and authorization, and continuous and advanced security audit and monitoring, a trust requirement level of the services is level 4. It should be understood that the foregoing classification of the trust requirement level of the service is merely an example, and the classification of the trust requirement level of the service may alternatively be in another manner. This is not specifically limited in this embodiment of this application.

Optionally, the security service scheduling module performs service distribution based on the performance requirement level and the trust requirement level of the request for the service.

Optionally, when the performance requirement level of the security service is higher than the trust requirement level, the security service scheduling module may send the request for the service to the local security service module for execution.

For example, when a time for executing an audio and multimedia control service (for example, a service of clicking a music play button) needs to be within (0,0.05] s, a performance requirement level of the audio and multimedia control service is level 3. The audio and multimedia control service is the non-sensitive service, has a low information security requirement, does not require identity authentication and authorization, and does not require security audit and monitoring, and the like. Therefore, a trust requirement level of the audio and multimedia control service is level 1. The performance requirement level of the audio and multimedia control service is higher than the trust requirement level, so that the security service scheduling module may send a request for the audio and multimedia control service to the local security service module for execution.

Optionally, when the trust requirement level of the security service is higher than the performance requirement level, the security service scheduling module may forward, by using a secure TEE proxy technology, the request for the service to a TA of the trusted execution environment operating system for execution.

For example, a time for responding to a trusted request for a real-time road condition and navigation display service (for example, a trusted request for a navigation display service) needs to be within (0.05,0.1] s. Therefore, a performance requirement level of the trusted request for the real-time road condition and navigation display service is level 2. The trusted request for the real-time road condition and navigation display service is a request for a sensitive service, has a strict information security requirement, and requires further identity authentication and authorization, continuous security audit and monitoring, and the like. Therefore, a trust requirement level of the trusted request for the real-time road condition and navigation display service is level 3. The trust requirement level of the trusted request for the real-time road condition and navigation display service is higher than the performance requirement level. The security service scheduling module forwards, by using the secure TEE proxy technology, the trusted request for the real-time road condition and navigation display service to the TA of the trusted execution environment operating system for response.

Optionally, when a trust requirement level of a service is equal to a performance requirement level, the security service scheduling module may forward, by using the secure TEE proxy technology, a request for the service to the TA of the trusted execution environment operating system for execution. Alternatively, the security service scheduling module sends a request for the service to the local security service module. This is not specifically limited in this embodiment of this application.

Alternatively, when the performance requirement level of the service is higher than or equal to a first threshold, and the trust requirement level is lower than a second threshold, the security service scheduling module may send the request for the service to the local security service module. When the trust requirement level of the service is higher than or equal to the second threshold, and the performance requirement level of the service is lower than the first threshold, the security service scheduling module may forward, by using the secure TEE proxy technology, the service to the TA of the trusted execution environment operating system for execution.

For example, the first threshold is 3, and the second threshold is 2. The performance requirement level for executing the audio and multimedia control service is level 3, which is equal to the first threshold 3; and the trust requirement level is level 1, which is lower than the second threshold 2. In this case, the security service scheduling module may send the request for the audio and multimedia control service to the local security service module. The trust requirement level of the trusted request for executing the real-time road condition and navigation display service is level 3, which is higher than the second threshold 3; and the performance requirement level is level 2, which is lower than the first threshold 3. In this case, the security service scheduling module forwards, by using the secure TEE proxy technology, the trusted request for the real-time road condition and navigation display service to the TA of the trusted execution environment operating system for execution.

Optionally, when the performance requirement level of the service is higher than the first threshold, and the trust requirement level of the service is higher than the second threshold, the security service scheduling module may forward, by using the secure TEE proxy technology, the service to the TA of the trusted execution environment operating system for execution. Alternatively, the security service scheduling module sends the request for the service to the local security service module. This is not specifically limited in this embodiment of this application.

This embodiment of this application is described by using an example in which when the performance requirement level of the service is higher than the trust requirement level, the security service scheduling module sends the request for the service to the local security service module, or when the trust requirement level of the service is higher than the performance requirement level, the security service scheduling module forwards, by using the secure TEE proxy technology, the service to the TA of the trusted execution environment operating system for execution.

Optionally, as shown in FIG. 7, the security service may be from a user mode or a kernel mode. This is not specifically limited in this embodiment of this application.

Optionally, for a security service request from the user mode, a security service sent by a safe and trusted application accesses a cryptographic service, and then the security service scheduling module performs security service distribution according to a performance requirement and a trust requirement of the security service.

For a security service request from the kernel mode, a security service sent by a safe and trusted module accesses a cryptographic subsystem, and then the security service scheduling module performs security service distribution according to a performance requirement and a trust requirement of the security service.

In an embodiment, as shown in FIG. 7, a service whose performance requirement is higher than a trust requirement is executed by using a local software algorithm.

The local software algorithm may execute a security service.

For example, a performance requirement of an audio and multimedia control service deployed on an instrument domain operating system in a non-secure world is higher than a trust requirement, so that the audio and multimedia control service is executed by using the local software algorithm. In this way, a larger processing bandwidth and a smaller processing delay can be obtained, to meet the performance requirement of the audio and multimedia control service.

In another embodiment, a request for a service whose trust requirement is higher than a performance requirement is forwarded, by using a secure TEE proxy technology, to a TA in a trusted execution environment operating system for execution.

Optionally, an example in which the trusted execution environment operating system is a security domain operating system is used. As shown in FIG. 8, when the trust requirement of the request for the service is higher than the performance requirement, the request for the security service is forwarded, by using the secure TEE proxy technology, to the TA of the security domain operating system in the TEE for response.

For example, a trust requirement of a trusted request for a real-time road condition and navigation display service deployed on the instrument domain operating system in the non-secure world is higher than a performance requirement, so that the trusted service request for the real-time road condition and navigation display service needs to be forwarded to the TA of the security domain operating system in the TEE for response, to meet the trust requirement of the trusted request for the real-time road condition and navigation display service.

Optionally, the security service scheduling module is further configured to encrypt a security service, to ensure security of a service proxy process.

Optionally, the security service scheduling module may encrypt a command and data in the trusted request for the real-time road condition and navigation display service by using an advanced encryption standard-GCM (advanced encryption standard-galois/counter mode, AES-GCM) symmetric encryption algorithm. A symmetric key (proxy tunnel key, PTK) of the AES-GCM symmetric encryption algorithm is negotiated by using a preset public key.

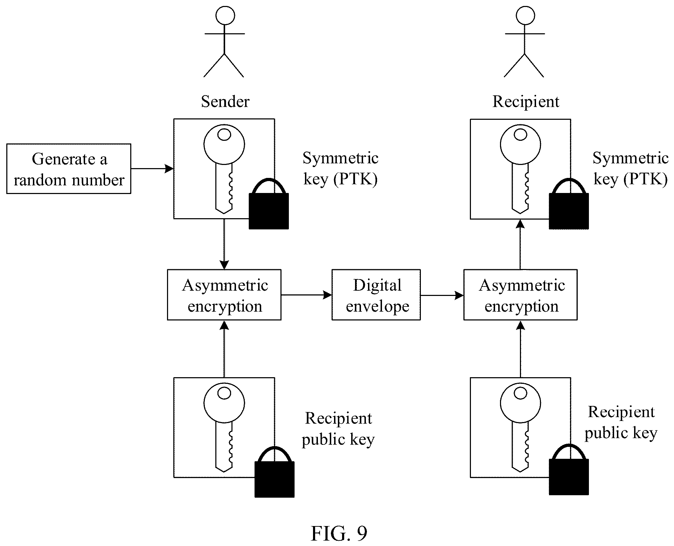

Optionally, as shown in FIG. 9, a sender and a recipient may negotiate in advance to determine a preset public key of the recipient, and the sender holds the preset public key. Then, the sender invokes a true random number generator in a kernel layer to generate a true random number, and generates a symmetric key based on the true random number. The sender performs asymmetric encryption on the symmetric key by using the preset public key of the recipient, to generate a digital envelope. The sender transmits the digital envelope to the recipient via a data path. After receiving the digital envelope, the recipient performs asymmetric decryption on the digital envelope by using a private key of the recipient to obtain the symmetric key, and stores the symmetric key locally. When receiving an encrypted request for a security service, the recipient may use the symmetric key to decrypt the request for the security service, and then respond to the request for the security service.

Optionally, after the sender generates the symmetric key, the sender and the recipient may confirm validity of the symmetric key with each other, to ensure that the generated symmetric key can be used for subsequent encryption and decryption of the request for the security service.

It should be understood that the encryption algorithm in this embodiment of this application is described by using the AES-GCM algorithm as an example. However, another encryption algorithm may also be used in this embodiment of this application, for example, an advanced encryption standard-CCM (AES-CMAC/counter Mode, AES-CCM) algorithm, an advanced encryption standard-CBC (advanced encryption standard-cipher block chaining, AES-CBC) algorithm, or a triple data encryption standard (triple data encryption algorithm, 3DES) algorithm. This is not limited in this embodiment of this application.

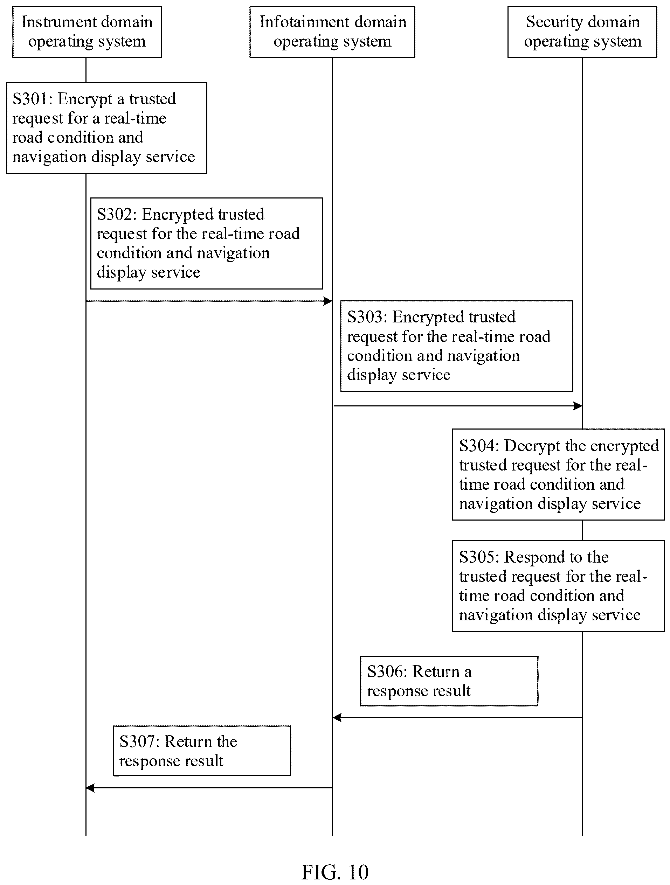

Specifically, an instrument domain operating system executes a secure TEE proxy technology by using a proxy client application on a third operating system. For example, the third operating system is an infotainment domain operating system. As shown in FIG. 10, an example in which a trusted service request for a real-time road condition and navigation display service on an instrument domain operating system is encrypted in a security service scheduling module, and encrypted key data (data of the trusted service request for the real-time road condition and navigation display service) needs to be forwarded, by using a secure TEE proxy technology, to a TA of a security domain operating system in a TEE through an infotainment domain operating system for response is used for description. The following steps S301 to S307 are included.

S301: The instrument domain operating system encrypts the trusted service request for the real-time road condition and navigation display service.

Optionally, the trusted service request for the real-time road condition and navigation display service is symmetrically encrypted in the security service scheduling module by using an AES-GCM algorithm.

Optionally, a symmetric key for encrypting the trusted service request for the real-time road condition and navigation display service needs to be determined by negotiation between a sender of the request, namely, the instrument domain operating system and a recipient, namely, the security domain operating system.

For example, the instrument domain operating system may negotiate with the security domain operating system in advance to determine a preset public key of the security domain operating system, and the instrument domain operating system holds the preset public key. The instrument domain operating system then generates a symmetric key based on a true random number. The instrument domain operating system performs asymmetric encryption on the symmetric key by using the preset public key of the security domain operating system, to generate a digital envelope. The instrument domain operating system sends the digital envelope to the security domain operating system. After receiving the digital envelope, the security domain operating system performs asymmetric decryption on the digital envelope by using a private key of the security domain operating system, to obtain the symmetric key, and stores the symmetric key into the security domain operating system.

Optionally, the instrument domain operating system may encrypt the trusted service request for the real-time road condition and navigation display service by using the symmetric key.

Optionally, in a process of encrypting the trusted service request, a nonce value based on a true random number is preset for anti-replay check.

S302: The instrument domain operating system sends the encrypted trusted service request for the real-time road condition and navigation display service to the infotainment domain operating system.

Optionally, the instrument domain operating system may send the encrypted trusted service request for the real-time road condition and navigation display service to the infotainment domain operating system via a communication channel. The communication channel may be a physical network interface card switching channel, a virtual network interface card switching channel, or a kernel proxy channel. This is not specifically limited in this embodiment of this application.

Specifically, the security service scheduling module on the instrument domain operating system sends the encrypted trusted service request for the real-time road condition and navigation display service to a cross-domain communication component in a kernel layer. After receiving the encrypted trusted service request for the real-time road condition and navigation display service, the cross-domain communication component of the instrument domain operating system sends the encrypted trusted service request for the real-time road condition and navigation display service to a cross-domain communication component in a kernel layer of the infotainment domain operating system via the communication channel.

Optionally, the cross-domain communication component of the infotainment domain operating system may send the encrypted trusted service request for the real-time road condition and navigation display service to a proxy client application. The proxy client application performs service proxy forwarding.

The proxy client application may be deployed on a user mode of the infotainment domain operating system. After receiving the encrypted trusted service request for the real-time road condition and navigation display service, the proxy client application deployed on the user mode may directly send an advanced request to the infotainment domain operating system. The infotainment domain operating system provides a corresponding advanced interface and an abstraction layer. The proxy client application may directly perform service proxy forwarding, without directly operating an underlying hardware device or performing complex system call, and implementation is easy.

Alternatively, the proxy client application may be deployed on a kernel mode of the infotainment domain operating system. The proxy client application deployed on the user mode has better security and performance, and can isolate an attack from a user mode. It is more secure to use the proxy client application to perform service proxy forwarding.

Optionally, the proxy client application may isolate the proxy client application on the infotainment domain operating system from another application or component on the infotainment domain operating system through a permission control mechanism such as a kernel security enhancement module (security-enhanced Linux, SELinux). This prevents the another application or component on the infotainment domain operating system from obtaining information about the proxy client application, which causes information leakage and reduces security.

S303: The infotainment domain operating system receives the encrypted trusted service request for the real-time road condition and navigation display service, and sends the encrypted trusted service request for the real-time road condition and navigation display service to the security domain operating system by using the proxy client application.

Optionally, as shown in FIG. 8, an example in which the proxy client application is deployed on the kernel mode of the infotainment domain operating system is used for description in this embodiment of this application.

Optionally, the proxy client application may invoke a trust zone driver module (TrustZone driver, TZdriver) to send the encrypted trusted service request for the real-time road condition and navigation display service to the security domain operating system.

The TZdriver is a driver in a kernel of the infotainment domain operating system for the security domain operating system, and may be used to complete communication between the infotainment domain operating system and the security domain operating system. The TZdriver enables protected data transmission between the secure world and the non-secure world, and ensures confidentiality and integrity of the encrypted trusted service request for the real-time road condition and navigation display service.

Specifically, the TZDriver may forward the encrypted trusted service request for the real-time road condition and navigation display service to a trusted application on the security domain operating system in the TEE by using a secure monitor call (secure monitor call, SMC) instruction.

The SMC instruction is an instruction in an ARM architecture, and is used for communication and switching between the secure world and the non-secure world. The SMC instruction allows a proxy client application on the non-secure world to initiate a request and invoke a trusted application on the secure world.

S304: The security domain operating system decrypts the encrypted trusted service request for the real-time road condition and navigation display service.

Optionally, after receiving the encrypted trusted service request for the real-time road condition and navigation display service, the trusted application on the security domain operating system may parse out a nonce random number stored in the request, and perform an anti-replay attack check on the encrypted trusted service request for the real-time road condition and navigation display service. If the check fails, the request is invalid and no further operation is performed. If the check succeeds, the request is a valid request, and the trusted application may decrypt the request by using the stored symmetric key, to obtain the plaintext command and data in the trusted service request for the real-time road condition and navigation display service. The symmetric key is the symmetric key obtained from the instrument domain operating system in step 301.

S305: The trusted application on the security domain operating system responds to the trusted service request for the real-time road condition and navigation display service, and obtains a response result.

Optionally, the trusted application invokes, based on a type of the trusted service request for the real-time road condition and navigation display service, an actual service trusted application through a TA-TA interface to respond to the request.

There are a plurality of TAs on the security domain operating system, and each TA is an independent execution entity and has a secure execution environment and a resource of the TA. The TA may provide different security functions and services, for example, encryption and decryption, secure storage, and secure authentication. The TA-TA interface allows secure data transmission and mutual invocation between different TAs. The trusted application invokes, through the TA-TA interface, a corresponding TA to execute a real-time road condition and navigation display application, to respond to the trusted service request for the real-time road condition and navigation display service, and obtains the response result, that is, a return value of the trusted service request for the real-time road condition and navigation display service.

S306: The trusted application on the security domain operating system returns the response result to the infotainment domain operating system.

Optionally, after encrypting the response result by using the AES-GCM algorithm, the trusted application returns the encrypted response result to the proxy client application on the infotainment domain operating system, to prevent security data leakage. After receiving the encrypted response result, the proxy client application returns the encrypted response result to the security service scheduling module of the instrument domain operating system. After receiving the encrypted response result, the security service scheduling module performs a decryption operation on the encrypted response result, to obtain the response result of the trusted service request for the real-time road condition and navigation display service, and returns the response result to a safe and trusted application.

S307: The infotainment domain operating system returns an execution result to the instrument domain operating system.

Optionally, after receiving the encrypted response result, the proxy client application on the infotainment domain operating system returns the encrypted response result to the security service scheduling module of the instrument domain operating system. After receiving the encrypted response result, the security service scheduling module performs the decryption operation on the encrypted response result, to obtain the response result of the trusted service request for the real-time road condition and navigation display service, and returns the response result to the safe and trusted application.

The instrument domain operating system is a functional safety operating system, and the security domain operating system is located in the secure world. A trusted service provided by the trusted application on the security domain operating system ensures trusted security of the trusted service request for the real-time road condition and navigation display service. This meets an information security requirement of the functional safety operating system. Encryption is performed in the process of forwarding the trusted service request for the real-time road condition and navigation display service, to prevent data leakage, and ensure functional safety of responding to the trusted service request for the real-time road condition and navigation display service.

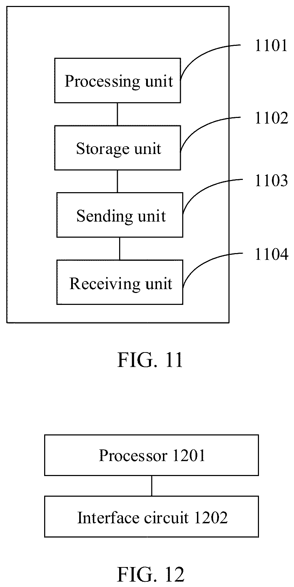

FIG. 11 is a diagram of a structure of an electronic device in the foregoing embodiments. The electronic device includes a processing unit 1101, a storage unit 1102, a sending unit 1103, and a receiving unit 1104. The apparatus may be an apparatus including a first safety operating system, a second safety operating system, a third operating system, a trusted execution environment operating system, or another form.

In an example in which the apparatus is an apparatus including the first safety operating system, the processing unit 1101 is configured to support steps S201 to S204 in FIG. 6, and/or is used in another process of the technology described in this specification.

In an example in which the apparatus is an apparatus including the second safety operating system, the processing unit 1101 is configured to support step S301 in FIG. 10, and/or is used in another process of the technology described in this specification.

In an example in which the apparatus is an apparatus including the trusted execution environment operating system, the processing unit 1101 is configured to support steps S304 and S305 in FIG. 10, and/or is used in another process of the technology described in this specification.

The storage unit 1102 is configured to support the apparatus in storing a result of a security check, and/or is used in another process of the technology described in this specification.

In an example in which the apparatus is an apparatus including the second safety operating system, the sending unit 1103 is configured to support step S301 in FIG. 10, and/or is used in another process of the technology described in this specification. The receiving unit 1104 is configured to support step S307 in FIG. 10, and/or is used in another process of the technology described in this specification.

In an example in which the apparatus is an apparatus including the third operating system, the sending unit 1103 is configured to support step S303 in FIG. 10, and/or is used in another process of the technology described in this specification. The receiving unit 1104 is configured to support step S302 in FIG. 10, and/or is used in another process of the technology described in this specification.

In an example in which the apparatus is an apparatus including the trusted execution environment operating system, the sending unit 1103 is configured to support step S306 in FIG. 10, and/or is used in another process of the technology described in this specification. The receiving unit 1104 is configured to support step S303 in FIG. 10, and/or is used in another process of the technology described in this specification.

All related content of the steps in the method embodiments may be cited in function descriptions of corresponding functional units. Details are not described herein again.

An embodiment of this application further provides a chip system. As shown in FIG. 12, the chip system includes at least one processor 1201 and at least one interface circuit 1202. The processor 1201 and the interface circuit 1202 may be interconnected through a line. For example, the interface circuit 1202 may be configured to receive a signal from another apparatus. For another example, the interface circuit 1202 may be configured to send a signal to another apparatus (for example, the processor 1201). For example, the interface circuit 1202 may read instructions stored in a memory, and send the instructions to the processor 1201. When the instructions are executed by the processor 1201, an electronic device is enabled to perform the steps in the method in the foregoing embodiments. Certainly, the chip system may further include another discrete component. This is not specifically limited in this embodiment of this application.

An embodiment of this application further provides a computer-readable storage medium. The computer-readable storage medium stores computer instructions. When the computer instructions are run on an electronic device, the electronic device is enabled to perform the foregoing related method steps to implement the method in the foregoing embodiments.

An embodiment of this application further provides a computer program product. When the computer program product is run on a computer, the computer is enabled to perform the foregoing related steps to implement the method in the foregoing embodiments.

In addition, an embodiment of this application further provides an apparatus. The apparatus may be specifically a component or a module. The apparatus may include a processor and a memory that are connected to each other. The memory is configured to store computer-executable instructions. When the apparatus runs, the processor may execute the computer-executable instructions stored in the memory, so that the apparatus performs the method in the foregoing method embodiments.

The electronic device, the computer-readable storage medium, the computer program product, or the chip provided in embodiments of this application is configured to perform the corresponding method provided above. Therefore, for beneficial effects that can be achieved, refer to the beneficial effects in the corresponding method provided above. Details are not described herein again.

The foregoing descriptions about implementations allow a person skilled in the art to understand that, for the purpose of convenient and brief description, division of the foregoing functional modules is merely used as an example for illustration. During actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed methods may be implemented in other manners. For example, the described electronic device embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or the units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program instructions, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A service processing method, applied to a safe and trusted apparatus, wherein the safe and trusted apparatus comprises a first safety operating system migrated from a non-secure world to a secure world, the first safety operating system is isolated from a trusted execution environment operating system in the secure world, and the method comprises:
obtaining a request for executing a high-safety and high-trust service, wherein the request for executing the high-safety and high-trust service comprises a cryptographic request for the high-safety and high-trust service, and the cryptographic request comprises at least one of an encryption request, a decryption request, a key export request, and a key generation request;
executing the cryptographic request by using a local trusted application;
sending, by the trusted application, a cryptographic request execution result to a high-safety and high-trust application; and
executing, by the high-safety and high-trust application, the high-safety and high-trust service based on the cryptographic request execution result.

2. The method according to claim 1, wherein the high-safety and high-trust service comprises an autonomous driving safety service.

3. A service processing method, applied to a safe and trusted apparatus, wherein the safe and trusted apparatus comprises a trusted execution environment operating system in a secure world, and a third operating system and a second safety operating system in a non-secure world, and the method comprises:
obtaining a request for executing a service; and
sending the request for the service to the trusted execution environment operating system or a local security service according to a trust requirement and a performance requirement of the request for the service, wherein the request for the service is used to trigger the trusted execution environment operating system or the local security service that receives the request for the service, to execute the service.

4. The method according to claim 3, wherein sending the request for the service to the trusted execution environment operating system or the local security service according to the trust requirement and the performance requirement of the request for the service comprises:
if the trust requirement of the request for the service is greater than the performance requirement, encrypting the request for the service, and sending the encrypted request for the service to the trusted execution environment operating system; or
if the performance requirement of the request for the service is greater than the trust requirement, sending the request for the service to the local security service.

5. The method according to claim 4, wherein the service comprises a trusted and secure safety instrument display service.

6. A service processing method, applied to a safe and trusted apparatus, wherein the safe and trusted apparatus comprises a trusted execution environment operating system in a secure world, and a third operating system and a second safety operating system in a non-secure world, and the method comprises:
receiving, by a proxy client application on the third operating system, a first request from the second safety operating system, wherein the first request is an encrypted request; and sending, by the proxy client application on the third operating system, the first request to the trusted execution environment operating system, wherein the proxy client application is isolated from another application and/or component on the third operating system.

7. The method according to claim 6, wherein the first request comprises a request for executing a trusted and secure safety instrument display service.

8. A service processing method, applied to a safe and trusted apparatus, wherein the safe and trusted apparatus comprises a trusted execution environment operating system in a secure world, and a third operating system and a second safety operating system in a non-secure world, and the method comprises:
receiving, by the trusted execution environment operating system, a first request from the second safety operating system, wherein the first request is an encrypted request, and the first request comprises a request for executing a first service;
decrypting the first request, and executing the first service, to obtain an execution result of the first service; and
returning the encrypted execution result of the first service to the second safety operating system.

9. The method according to claim 8, wherein receiving, by the trusted execution environment operating system, the first request from the second safety operating system comprises:
receiving, by the trusted execution environment operating system, the first request from the second safety operating system through the third operating system.

10. The method according to claim 8 or 9, wherein the first service comprises a trusted and secure safety instrument display service.

11. A service processing apparatus, used in a safe and trusted apparatus, wherein the safe and trusted apparatus comprises a first safety operating system migrated from a non-secure world to a secure world, and the first safety operating system is isolated from a trusted execution environment operating system in the secure world;
the first safety operating system is configured to obtain a request for executing a high-safety and high-trust service, wherein the request for executing the high-safety and high-trust service comprises a cryptographic request for the high-safety and high-trust service, and the cryptographic request comprises at least one of an encryption request, a decryption request, a key export request, and a key generation request;
the first safety operating system is further configured to execute the cryptographic request by using a local trusted application;
the first safety operating system is further configured to send a cryptographic request execution result to a high-safety and high-trust application by using the trusted application; and
the first safety operating system is further configured to execute the high-safety and high-trust service by using the high-safety and high-trust application based on the cryptographic request execution result.

12. The apparatus according to claim 11, wherein the high-safety and high-trust service comprises an autonomous driving safety service.

13. A service processing apparatus, used in a safe and trusted apparatus, wherein the safe and trusted apparatus comprises a trusted execution environment operating system in a secure world, and a third operating system and a second safety operating system in a non-secure world, and the apparatus comprises:
the second safety operating system, configured to obtain a request for executing a service, wherein
the second safety operating system is further configured to send the request for the service to the trusted execution environment operating system or a local security service according to a trust requirement and a performance requirement of the request for the service, wherein the request for the service is used to trigger the trusted execution environment operating system or the local security service that receives the request for the service, to execute the service.

14. The apparatus according to claim 13, wherein the second safety operating system is further configured to:
if the trust requirement of the request for the service is greater than the performance requirement, encrypt the request for the service, and send the encrypted request for the service to the trusted execution environment operating system; or
if the performance requirement of the request for the service is greater than the trust requirement, send the request for the service to the local security service.

15. The apparatus according to claim 14, wherein the service comprises a trusted and secure safety instrument display service.

16. A service processing apparatus, used in a safe and trusted apparatus, wherein the safe and trusted apparatus comprises a trusted execution environment operating system in a secure world, and a third operating system and a second safety operating system in a non-secure world, and the apparatus comprises:
the third operating system, configured to receive a request for a service from the second safety operating system, wherein the first request is an encrypted request, and an application receiving the request for the service is a proxy client application on the third operating system, wherein
the third operating system is further configured to send the request for the service to the trusted execution environment operating system, and the proxy client application is isolated from another application and/or component on the third operating system.

17. The apparatus according to claim 16, wherein the first request comprises a request for executing a trusted and secure safety instrument display service.

18. A service processing apparatus, used in a safe and trusted apparatus, wherein the safe and trusted apparatus comprises a trusted execution environment operating system in a secure world, and a third operating system and a second safety operating system in a non-secure world, and the apparatus is further used in:
the trusted execution environment operating system, configured to receive a first request from the second safety operating system, wherein the first request is an encrypted request, and the first request comprises a request for executing a first service, wherein
the trusted execution environment operating system is further configured to decrypt the first request, and execute the first service, to obtain an execution result of the first service; and
the trusted execution environment operating system is further configured to return the encrypted execution result of the first service to the second safety operating system.

19. The apparatus according to claim 18, wherein
the trusted execution environment operating system is further configured to receive the first request from the second safety operating system through the third operating system.

20. The apparatus according to claim 18 or 19, wherein the first service comprises a trusted and secure safety instrument display service.

21. A computer-readable storage medium, comprising computer instructions, wherein when the computer instructions are run on an electronic device, the electronic device is enabled to perform the method according to claim 1 or 2, or perform the method according to any one of claims 3 to 5, or perform the method according to claim 6 or 7, or perform the method according to any one of claims 8 to 10.

22. A computer program product, wherein when the computer program product is run on a computer, the computer is enabled to perform the method according to claim 1 or 2, or perform the method according to any one of claims 3 to 5, or perform the method according to claim 6 or 7, or perform the method according to any one of claims 8 to 10.
